# FASCICULE DE BREVET EUROPEEN

(11) **EP 2 038 174 B1**
(45) Date de publication et mention de la délivrance du brevet: **18.11.2009**
(21) Numéro de dépôt: 07787203.4
(22) Date de dépôt: 09.07.2007
(51) Int. Cl.: B64C 27/26

(54) **DISPOSITIF D'ACCROCHAGE D'UN MOTEUR D'AERONEF COMPORTANT DEUX BIELLES DE REPRISE DE POUSSEE A EMBOITEMENT TRANSVERSAL**
VORRICHTUNG ZUR TRIEBWERKSBEFESTIGUNG MIT ZWEI SCHRÄG ZUSAMMENPASSENDEN SCHUBREAKTIONSVERBINDUNGSSTANGEN
AIRCRAFT ENGINE ATTACHMENT DEVICE COMPRISING TWO THRUST-REACTING LINK RODS THAT FIT TOGETHER TRANSVERSELY

(30) Priorité: 10.07.2006 FR 0652889
(43) Date de publication de la demande: 25.03.2009
(73) Titulaire: AIRBUS France, 31060 Toulouse (FR)
(72) Inventeur: LEVERT, Stéphane, 31200 Toulouse (FR); BEAUFORT, Jacques, 31700 Blagnac (FR)
(74) Mandataire: Ilgart, Jean-Christophe
(86) Numéro de dépôt international: PCT/EP2007/056921
(87) Numéro de publication internationale: WO 2008/006784

(56) Documents cités:
- EP-A2- 0 805 108

## Description

### DOMAINE TECHNIQUE

La présente invention se rapporte de façon générale à un dispositif d'accrochage d'un moteur d'aéronef, par exemple destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais « Engine Mounting Structure »), peut indifféremment être employé pour suspendre un moteur au-dessous de la voilure de l'aéronef, monter ce moteur au-dessus de cette même voilure, ou bien encore pour rapporter ce moteur en partie arrière du fuselage de l'aéronef.

### ETAT DE LA TECHNIQUE ANTERIEURE

Un tel dispositif d'accrochage est connu du EP 0 805 108, qui montre toutes les caractéristiques du préambule de la revendication indépendante.

Un tel dispositif d'accrochage est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, dite structure primaire, souvent du type « caisson », c'est-à-dire formée par l'assemblage de longerons supérieurs et inférieurs et de panneaux latéraux raccordés entre-eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part au carter du turbomoteur, et d'autre part rapportées sur un palonnier, lui-même articulé sur la structure rigide du dispositif d'accrochage.

De la même façon, le dispositif d'accrochage comporte également une autre série d'attaches constituant un système dé montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, les solutions proposées antérieurement prévoient que le dispositif de reprise des efforts de poussée intègre deux bielles latérales disposant chacune d'une extrémité arrière montée de façon articulée sur l'extrémité latérale du palonnier qui lui est associée, à l'aide d'un axe d'articulation traversant donc la bielle et le palonnier.

Généralement, cet axe d'articulation s'étend sensiblement verticalement et parallèlement à l'axe selon lequel le palonnier est articulé sur la ferrure de raccordement solidaire de la structure rigide du dispositif d'accrochage, de manière à pouvoir autoriser un bon balancement de ce même palonnier.

Lorsque le dispositif de reprise des efforts de poussée est assemblé entre le moteur et la structure rigide, il n'est alors plus possible de déconnecter / reconnecter les bielles sur le palonnier, ces actions étant pourtant recherchées par exemple lors d'une opération ultérieure de dépose du moteur. Il devient donc nécessaire de réaliser une déconnexion / reconnexion de l'ensemble du palonnier portant les bielles latérales de reprise, par démontage / montage de l'axe d'articulation de ce même palonnier sur la structure rigide.

Néanmoins, cette façon de procéder nécessite de positionner un outillage imposant dans une zone peu accessible et très encombrée. En effet, l'embout inférieur de l'axe d'articulation du palonnier destiné à coopérer avec l'outillage est fortement rapproché du carter du turboréacteur vers lequel il est orienté.

Ainsi, la mise en place et la manipulation de cet outillage engendrent des risques importants de détérioration de l'ensemble moteur, et sont de toute façon synonymes de difficultés d'intervention pénalisantes en termes de temps de montage. A titre indicatif, ces inconvénients sont notamment rencontrés lorsque la mise en place de l'outillage s'effectue entre le carter du turboréacteur et le dessous du palonnier monté pivotant autour de l'axe d'articulation précité.

### EXPOSÉ DE L'INVENTION

L'invention a donc pour but de proposer un dispositif d'accrochage et un ensemble moteur comprenant un tel dispositif remédiant aux inconvénients mentionnés ci-dessus, relatifs aux réalisations de l'art antérieur.

Pour ce faire, l'invention a pour objet un dispositif d'accrochage d'un moteur d'aéronef comportant une structure rigide et des moyens d'accrochage du moteur sur la structure rigide, les moyens d'accrochage comportant un dispositif de reprise des efforts de poussée générés par le moteur, ce dispositif de reprise comportant deux bielles latérales de reprise des efforts de poussée présentant chacune une extrémité arrière montée sur un palonnier du dispositif, par l'intermédiaire d'une liaison mécanique. Selon l'invention, chaque liaison mécanique est réalisée à l'aide d'un pion prévu sur le palonnier et traversant un orifice pratiqué dans l'extrémité arrière de la bielle associée, ce pion étant agencé de manière à s'étendre sensiblement selon la direction tranversale (Y) du dispositif d'accrochage.

Ainsi, avec cette configuration propre à la présente invention, dans laquelle chaque pion s'étend donc sensiblement selon la direction transversale du dispositif ou de façon légèrement inclinée par rapport à celle-ci, il devient aisément possible de déconnecter / reconnecter l'extrémité arrière de chacune des bielles latérales de reprise, par exemple lors d'une opération de dépose / repose du moteur. De ce fait, il n'est avantageusement plus nécessaire de démonter / remonter l'ensemble du palonnier lors de la mise en oeuvre d'une telle opération.

La mise en place et la manipulation de l'outillage requis pour le montage / démontage de chacune des deux bielles latérales n'engendrent quasiment aucun risque de détérioration de l'ensemble moteur, dans la mesure où l'embout libre de chaque pion est orienté vers une zone peu encombrée de cet ensemble moteur. A ce titre, il est précisé que l'outillage employé est alors avantageusement moins imposant que celui nécessité dans l'art antérieur pour assurer le démontage / remontage de l'ensemble du palonnier portant les extrémités arrière des bielles latérales.

De plus, la facilité de montage procurée par un tel agencement permet d'obtenir un gain en termes de temps de montage, ce dernier étant d'ailleurs également optimisé par le fait que les extrémités arrière des bielles latérales peuvent à présent aisément être emboîtées dans leur pion associé par un simple mouvement sensiblement latéral de ces bielles, initialement raccordées au moteur par leur extrémité avant.

De préférence, on prévoit que chaque pion s'étend selon un axe situé dans un angle solide de forme de cône de révolution d'axe central correspondant à une direction transversale du dispositif d'accrochage, et de valeur inférieure ou égale à 2n.(1-cos(15°)) sr, cette caractéristique illustrant alors la notion d'extension sensiblement transversale des pions précités. La valeur précitée traduit un angle solide de forme de cône de révolution dont la génératrice est écartée de l'axe central d'un angle de 15°.

Toujours pour illustrer cette notion, il est de préférence fait en sorte qu'en vue de dessus, chaque pion s'étend selon un axe formant un angle de valeur inférieure ou égale à 15° avec une direction transversale du dispositif d'accrochage, et/ou qu'en vue de face, chaque pion s'étend selon un axe formant un angle de valeur inférieure où égale à 15° avec cette direction transversale.

De préférence, pour chaque liaison mécanique, l'orifice pratiqué dans l'extrémité arrière de la bielle est équipé d'une rotule traversée par le pion prévu sur le palonnier.

De manière préférentielle, le palonnier est articulé selon un axe d'articulation traversant également une ferrure de raccordement à la structure rigide, le dispositif de reprise des efforts de poussée comportant en outre une ferrure de butée de forme en fer à cheval également traversée dans sa partie centrale par l'axe d'articulation et destinée à être rapportée fixement sur la structure rigide, la ferrure de butée de forme en fer à cheval présentant une surface de butée située en arrière par rapport au palonnier de manière à pouvoir stopper, dans les deux sens, la rotation de ce palonnier autour de son axe d'articulation.

De préférence, les moyens d'accrochage du moteur comprennent également une attache moteur avant et une attache moteur arrière fixées sur la structure rigide, l'attache moteur avant étant conçue de manière à reprendre des efforts s'exerçant selon une direction transversale du dispositif et selon la direction verticale de ce dispositif, et l'attache moteur arrière étant conçue de manière à reprendre des efforts s'exerçant selon les directions transversale et verticale du dispositif et à assurer la reprise du moment s'exerçant selon une direction longitudinale de ce dispositif.

Comme cela est habituellement le cas, les deux bielles latérales de reprise des efforts de poussée sont préférentiellement disposées de part et d'autre d'un plan médian vertical et longitudinal du dispositif d'accrochage.

En outre, l'invention a également pour objet un ensemble moteur comprenant un moteur tel qu'un turboréacteur et un dispositif d'accrochage de ce moteur, le dispositif d'accrochage étant tel que celui qui vient d'être décrit.

Enfin, l'invention se rapporte aussi à un aéronef comportant au moins un ensemble moteur tel que celui indiqué ci-dessus, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un ensemble moteur pour aéronef, comprenant un dispositif d'accrochage selon un mode de réalisation préféré de la présente invention;
- la figure 2 représente une vue éclatée partielle en perspective du dispositif de reprise des efforts de poussée appartenant au dispositif d'accrochage montré sur la figure 1 ;
- la figure 3 représente une vue non éclatée du dispositif de reprise des efforts de poussée montré sur la figure 2 ;
- les figures 4a à 4c illustrent l'orientation sensiblement transversale des pions équipant le palonnier appartenant au dispositif de reprise des efforts de poussée montré sur les figures 1 à 3 ;
- la figure 5 représente une vue schématique en perspective montrant la reprise des efforts assurée par les différents éléments constitutifs des moyens d'accrochage du dispositif montré sur la figure 1 ; et
- les figures 6a à 6e représentent des vues schématisant le montage de l'extrémité arrière de chacune des deux bielles de reprise des efforts de poussée sur son pion de palonnier associé.

### EXPOSÉ DÉTAILLÉ DE MODES DE RÉALISATION PRÉFÉRÉS

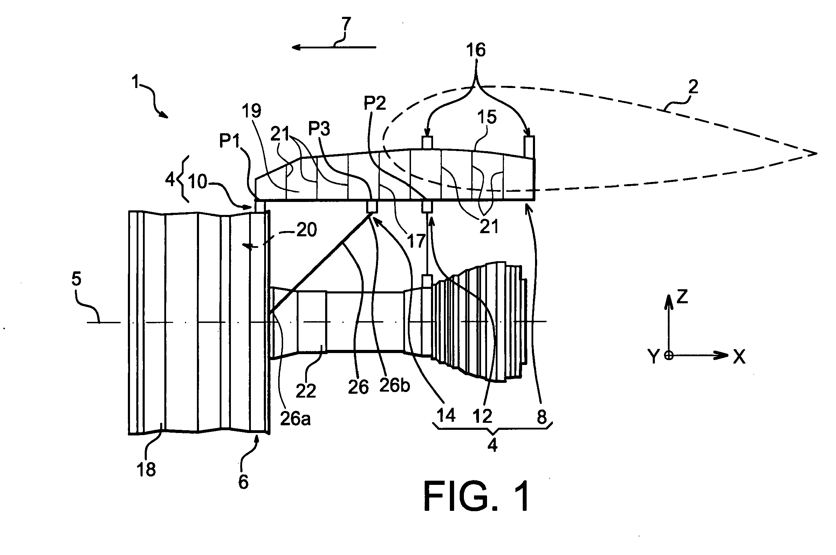

En référence à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6 et à celle du dispositif 14, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6 et à celle du dispositif 14, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est réalisé par l'assemblage d'un longeron supérieur 15, d'un longeron inférieur 17, et de deux longerons / panneaux latéraux 19 (un seul étant visible en raison de la vue de côté), ces éléments 15, 17, 19 étant raccordés entre eux par l'intermédiaire de nervures transversales 21 prenant chacune globalement la forme d'un rectangle. Ainsi, les nervures 21 s'étendent dans des plans YZ, les longerons 15, 17 s'étendent grossièrement dans des plans XY, et les panneaux latéraux 19 dans des plans XZ.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18.
Néanmoins, il serait également possible de prévoir que l'attache moteur avant 10 soit fixée sur un carter de liaison entre le carter central et le carter de soufflante, comme cela est connu de l'homme du métier. L'attache moteur avant 10, conçue de manière classique et connue de l'homme du métier, est fixée en un premier point P1 de la structure rigide 8, cette dernière étant également dénommée structure primaire.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1.

Dans ce mode de réalisation préféré, le dispositif de reprise des efforts de poussée 14 est fixé en un troisième point P3 de la structure rigide 8, le point P3 étant situé entre les deux points P1 et P2.

Globalement, le dispositif de reprise 14 présente deux bielles latérales de reprise des efforts de poussée 26 (une seule étant visible sur la figure 1), chacune de ces bielles comportant une extrémité avant 26a raccordée au carter de soufflante 18, par exemple sur ou à proximité d'un plan médian horizontal du turbomoteur 6.

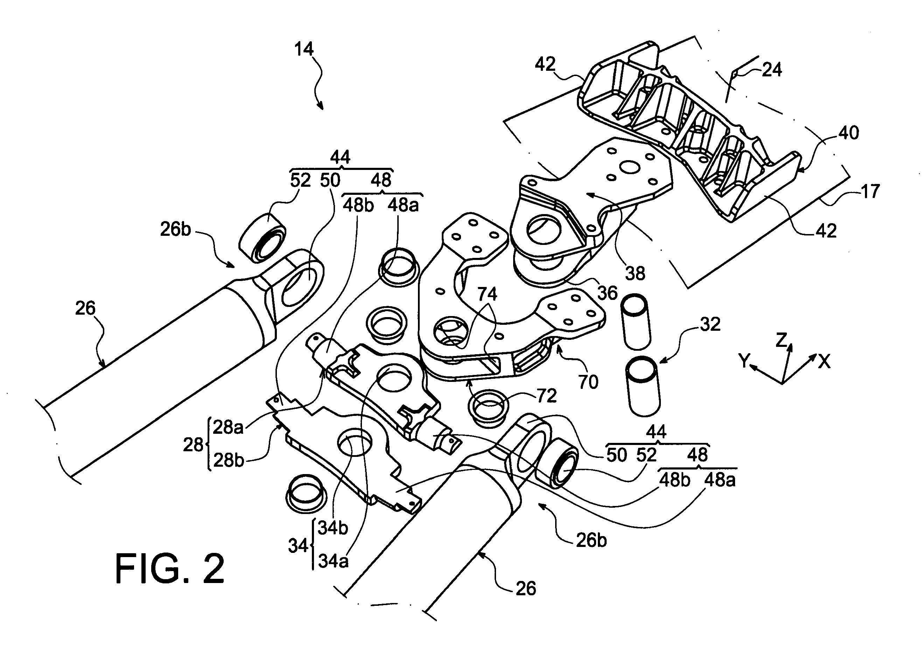

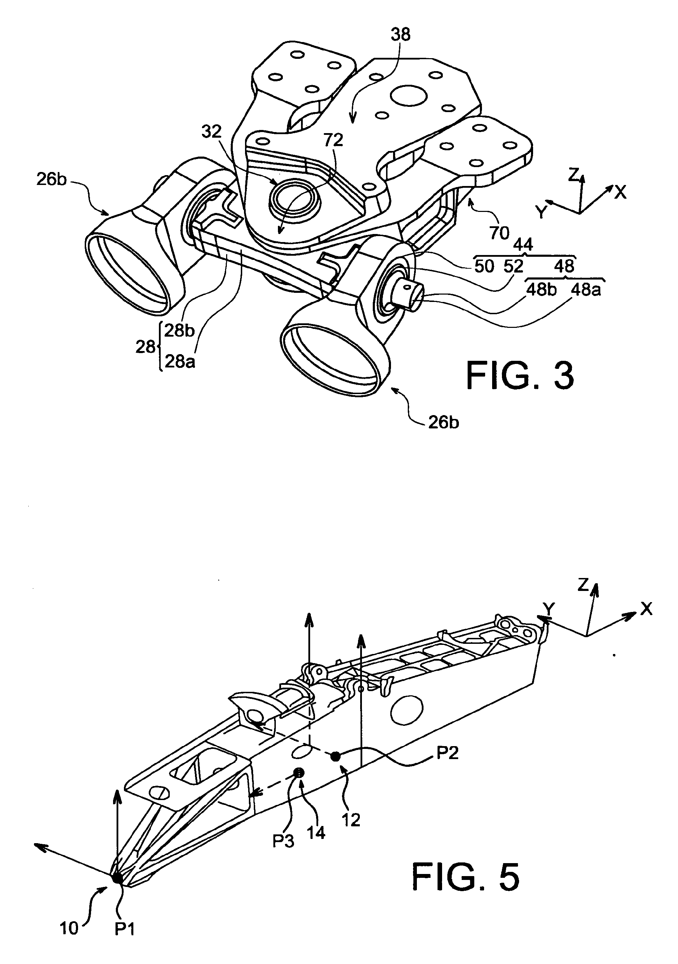

La partie arrière de ce dispositif de reprise 14 va à présent être détaillé en référence aux figures 2 et 3.

Sur ces figures, on peut apercevoir que les deux bielles latérales 26, disposées de part et d'autre du plan médian vertical et longitudinal 24 du dispositif d'accrochage correspondant également à un plan médian vertical du turboréacteur, ont chacune une extrémité arrière 26b raccordée à un palonnier 28, comme cela sera détaillé ci-après.

Le palonnier 28 est couplé à un axe d'articulation 32, de préférence du type axe double, positionné de manière à être traversé par le plan médian vertical et longitudinal 24. Cet axe d'articulation du palonnier traverse donc un orifice 34 pratiqué dans le palonnier 28 lui-même, ainsi qu'une chape 36 dont les deux flancs sont disposés de part et d'autre du palonnier 28, cette chape 36 appartenant à une ferrure 38 de raccordement à la structure rigide.

Plus précisément, pour assurer une fonction de sécurité dite fonction « Fail Safe », le palonnier 28 est de préférence constitué par deux ferrures 28a, 28b superposées comme montré sur la figure 2, l'orifice 34 précité étant donc défini conjointement par les deux orifices 34a, 34b prévus respectivement sur les ferrures 28a, 28b.

La ferrure de raccordement 38 présente une extrémité arrière rapportée fixement sous le longeron inférieur 17 avec lequel elle est préférentiellement en contact, les moyens d'assemblage utilisés (non représentés), par exemple du type boulons, venant coopérer avec une ferrure de renforcement 40 logée à l'intérieur du caisson, et étant de préférence en contact avec la surface intérieure du longeron inférieur 17. A cet égard, on peut prévoir que cette ferrure de renforcement 40 présente deux flancs latéraux 42 destinés à être fixés respectivement sur deux ailes (non représentées) du longeron inférieur 17 du caisson, son flanc inférieur épousant donc la surface intérieure de ce même longeron inférieur 17. Ainsi, la ferrure de renforcement 40 est similaire aux nervures transversales du caisson, à la différence qu'elle ne s'étend pas sur toute la hauteur de la structure rigide.

Pour assurer l'assemblage de l'extrémité arrière 26b de chaque bielle 26, il est prévu une liaison mécanique 44 constituant la liaison par laquelle sont destinés à transiter les efforts de poussée en mode normal. Elle est essentiellement réalisée à l'aide d'un pion 48 prévu sur l'extrémité latérale associée du palonnier 28, ce pion 48 présentant la particularité de s'étendre sensiblement transversalement par rapport au dispositif 14, à savoir sensiblement selon la direction Y même si il peut être légèrement incliné par rapport à cette direction, comme cela sera décrit ci-après. On prévoit à cet égard que le pion s'étend de préférence orthogonalement par rapport à l'axe de la bielle latérale 26 qu'il traverse.

Ici encore, en raison de la nature double de la ferrure employée pour réaliser le palonnier 28, chacun des deux pions 48 est préférentiellement défini par deux demi-cylindres 48a, 48b appartenant respectivement aux ferrures 28a, 28b et étant en contact l'un avec l'autre selon leur face diamétrale. En effet, chaque pion 48 est préférentiellement prévu pour présenter une section circulaire, et comporte éventuellement une extension de section plus faible pour accueillir des moyens de fixation (non représentés), comme cela est visible sur les figures 2 et 3.

Le pion 48 pénètre dans un orifice 50 prévu sur l'extrémité arrière 26b de la bielle 26 concernée, l'axe de cet orifice étant alors sensiblement confondu avec celui du pion 48 précité. De plus, on prévoit une rotule 52 entre l'orifice 50 et le pion 48, ce dernier traversant une bague intérieure de la rotule tandis que la bague extérieure de celle-ci est logée fixement dans l'orifice 50.

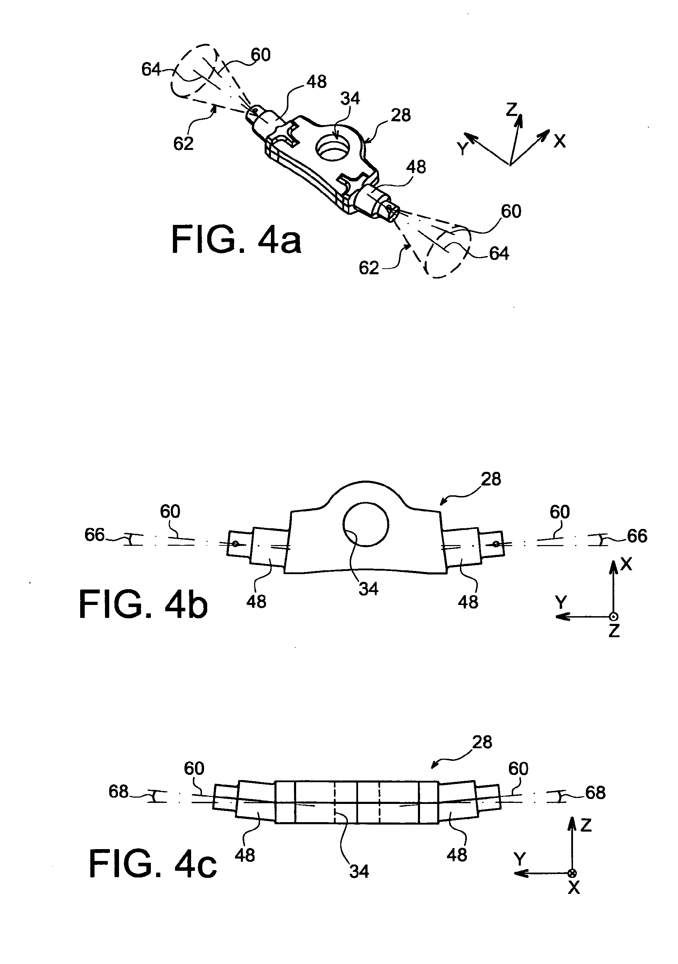

En référence à présent aux figures 4a à 4c, on peut voir que chaque pion 48 peut non seulement être orienté selon la direction Y, ou bien de façon alternative être légèrement incliné par rapport à celle-ci, le but recherché étant de toujours conserver une orientation sensiblement transversale pour ces pions afin que le montage de la liaison mécanique associée 44 puisse rester aisé et sans risque de détérioration pour l'ensemble moteur 1. De plus, on recherche préférentiellement à ce que le pion s'étende orthogonalement par rapport à l'axe de la bielle latérale 26 qu'il traverse.

Ainsi, comme montré sur la figure 4a, on peut prévoir que chaque pion 48 s'étend selon un axe 60 situé dans un angle solide 62 de forme de cône de révolution d'axe central 64 correspondant à la direction Y, la valeur de cet angle solide 62 étant alors inférieure ou égale à 2π.(1-cos(15°)) sr.

D'autre part, en référence à la figure 4b, on prévoit qu'en vue de dessus tel que cela est représenté, chaque pion 48 s'étend selon un axe 60 formant un angle 66 de valeur inférieure ou égale à 15° avec la direction transversale Y. De façon analogue, on prévoit qu'en vue de face tel que cela est représenté sur la figure 4c, chaque pion 48 s'étend selon un axe 60 formant un angle 68 de valeur inférieure ou égale à 15° avec la direction transversale Y.

Quoi qu'il en soit, comme montré sur les figures 4a à 4c, on fait de préférence en sorte que chaque pion 48 s'étende légèrement vers l'arrière en s'écartant du centre du dispositif de reprise des efforts, et éventuellement en sorte que chaque pion 48 s'étende légèrement vers le haut en s'écartant du centre de ce même dispositif de reprise.

A nouveau en référence aux figures 2 et 3, on peut voir que le dispositif de reprise 14 comporte en outre une ferrure de butée 70 de forme en fer à cheval, cette dernière disposant au niveau d'une portion centrale avant d'une chape 72 également traversée par l'axe d'articulation 32. Plus précisément, les deux flancs de cette chape 72 sont disposés de part et d'autre du palonnier 28, et sont plus spécifiquement chacun interposé entre ce palonnier 28 et l'un des deux flancs de la chape 36 de la ferrure de raccordement 38.

La ferrure de butée 70 de forme en fer à cheval, préférentiellement disposée de manière à être traversée symétriquement par le plan médian 24, comporte deux extrémités libres orientées sensiblement vers l'arrière et chacune rapportée sur le caisson de la même façon que la ferrure de raccordement 38, à savoir en épousant extérieurement le longeron inférieur 17 et en étant assemblée à ce dernier par l'intermédiaire de moyens d'assemblage conventionnels (non représentés) coopérant avec la ferrure de renfort 40.

De plus, la ferrure de butée 70 dispose d'une surface de butée 74 située en arrière par rapport au palonnier 28, et étant plus précisément définie au fond de la chape 72 précitée. Elle est conçue de manière à pouvoir stopper, dans les deux sens, la rotation du palonnier autour de son axe d'articulation 32.

Effectivement, la surface de butée 74, qui peut éventuellement être réalisée à l'aide de deux surfaces distinctes disposées symétriquement par rapport au plan médian vertical 24 comme montré sur la figure 2, est donc judicieusement positionnée de sorte qu'en cas de défaillance du dispositif de reprise 14, pouvant par exemple prendre la forme d'une rupture de l'une des bielles 26 ou d'une rupture de l'une des deux liaisons 44, la rotation du palonnier 28 soit stoppée par cette surface 74. Il est noté qu'en mode normal, cette surface de butée 74 reste bien entendu inactive, étant donné que le palonnier 28 se situe à distance de celle-ci.

Ainsi, lorsqu'une défaillance du type indiqué ci-dessus survient, le palonnier 28 qui n'est plus raccordé que par une seule bielle 26 pivote selon l'axe 32 jusqu'à ce que l'une de ses extrémités latérales vienne au contact de la surface de butée 74 située à proximité. Par conséquent, il est à comprendre que le positionnement de la surface 74 est en effet retenu de manière à imposer un angle maximal de rotation de ce palonnier autour de l'axe 32, cet angle maximal, de préférence identique pour les deux sens de rotation, étant naturellement déterminé de sorte que la fonction de reprise des efforts de poussée puisse toujours être assurée par le dispositif de reprise 14, au moins durant une période déterminée.

Avec un tel agencement, comme on peut le voir schématiquement sur la figure 5, l'attache moteur avant 10 fixée au point P1 est conçue de manière à reprendre des efforts exercés principalement selon la direction verticale Z, ainsi que selon une direction transversale Y, mais pas adaptée pour reprendre des efforts exercés selon la direction longitudinale X.

L'attache moteur arrière 12 est quant à elle conçue pour reprendre des efforts exercés principalement selon la direction transversale Y, et sa conception retenue est préférentiellement d'un type connu appelé à « demi-attaches » permettant à chacune de ces deux demi-attaches (non représentées) de reprendre des efforts exercés principalement selon la direction verticale Z. L'attache arrière est aussi capable d'assurer la reprise du moment s'exerçant selon la direction X.

Enfin, le dispositif de reprise 14 est en mesure de reprendre des efforts exercés principalement selon la direction longitudinale X.

De cette manière, les efforts s'exerçant selon la direction longitudinale X sont exclusivement repris par le dispositif de reprise des efforts de poussée, les efforts s'exerçant selon la direction transversale Y sont repris conjointement par les attaches avant 10 et arrière 12, et les efforts s'exerçant selon la direction verticale Z sont également repris conjointement par l'attache avant 10 et les deux demi-attaches de l'attache arrière 12.

D'autre part, la reprise du moment s'exerçant selon la direction X est assurée uniquement par les deux demi-attaches de l'attache arrière 12, tandis que la reprise des moments s'exerçant selon les directions Y et Z est assurée conjointement par ces deux attaches moteur 10, 12.

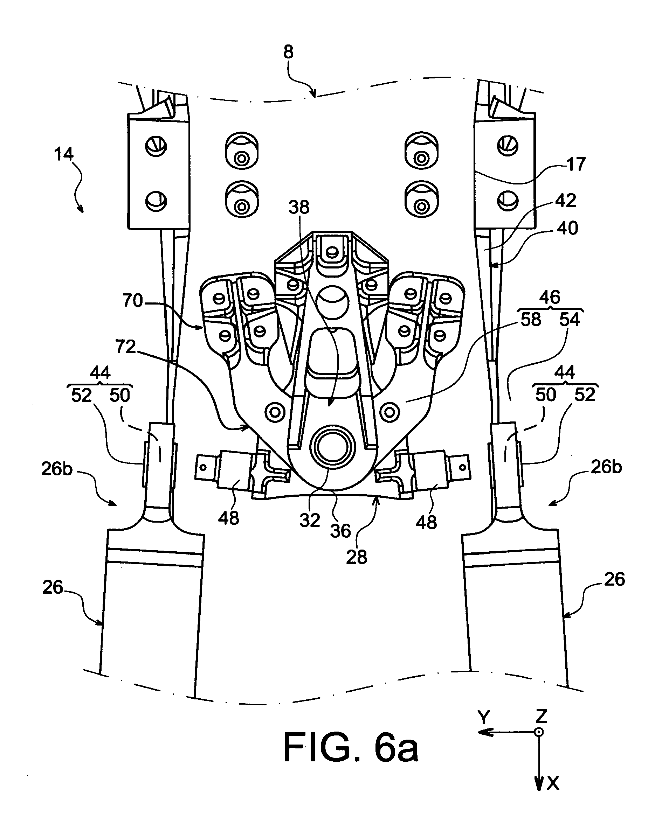

En référence aux figures 6a à 6e, on peut apercevoir différentes étapes successives d'un procédé d'assemblage du dispositif d'accrochage 14, les vues montrées étant globalement prises de dessous.

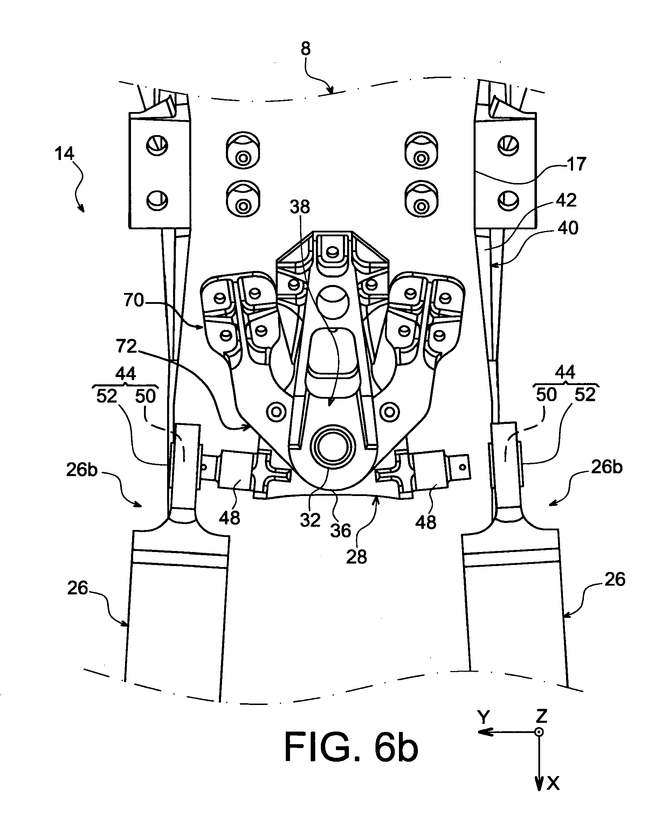

Tout d'abord, en référence à la figure 6a, on peut apercevoir que l'une des spécificités du procédé réside dans le fait que préalablement au montage des extrémités arrière des bielles sur leurs pions respectivement associés, le palonnier 28 est déjà rapporté sur la structure rigide 8, par l'intermédiaire de la ferrure de raccordement 38. Naturellement, avant de débuter l'engagement de l'extrémité arrière 26b de la première bielle 26 dans son pion associé 48 tel que montré sur la figure 6b, le moteur est mis convenablement en place par rapport à la structure rigide 8 du mât.

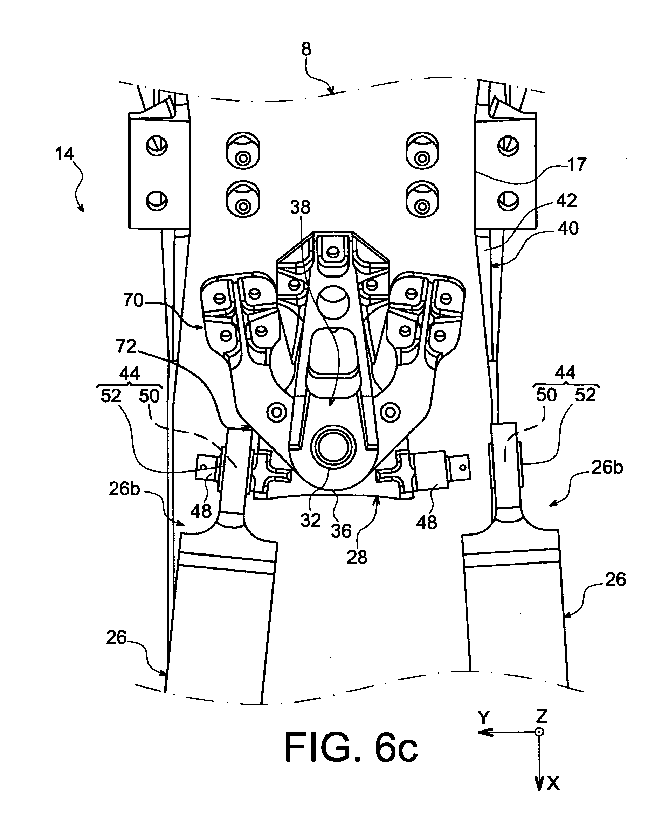

Comme évoqué précédemment, l'engagement de l'extrémité arrière 26b de la bielle 26 peut s'effectuer par un simple mouvement sensiblement latéral de cette dernière, située à proximité du pion concerné. De plus, la bielle 26 étant déjà montée au niveau de son extrémité avant 26a sur le moteur, le mouvement peut donc grossièrement s'apparenter à une faible rotation de la bielle autour de son extrémité avant 26a, réalisée de manière à obtenir un engagement total de l'extrémité arrière 26b dans le pion 48, comme montré sur la figure 6c.

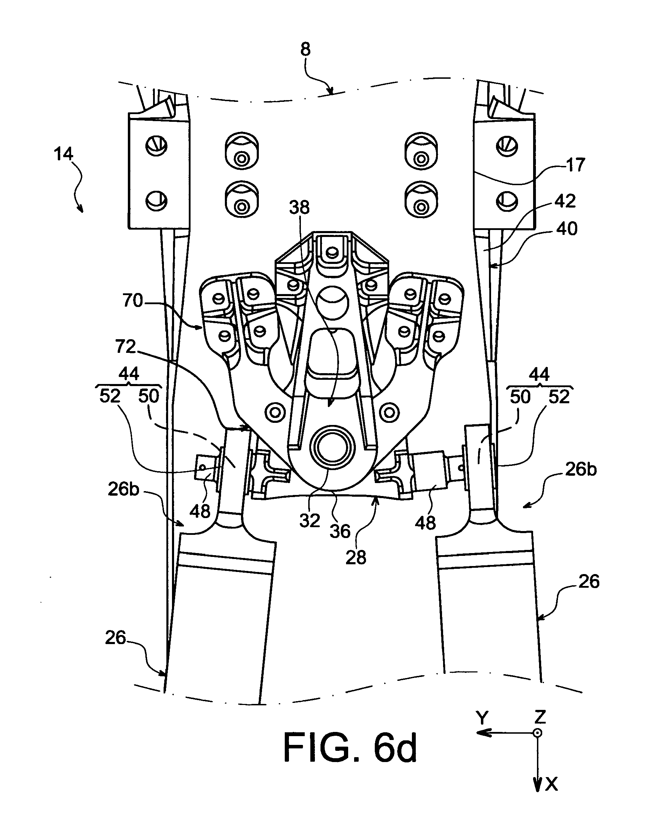

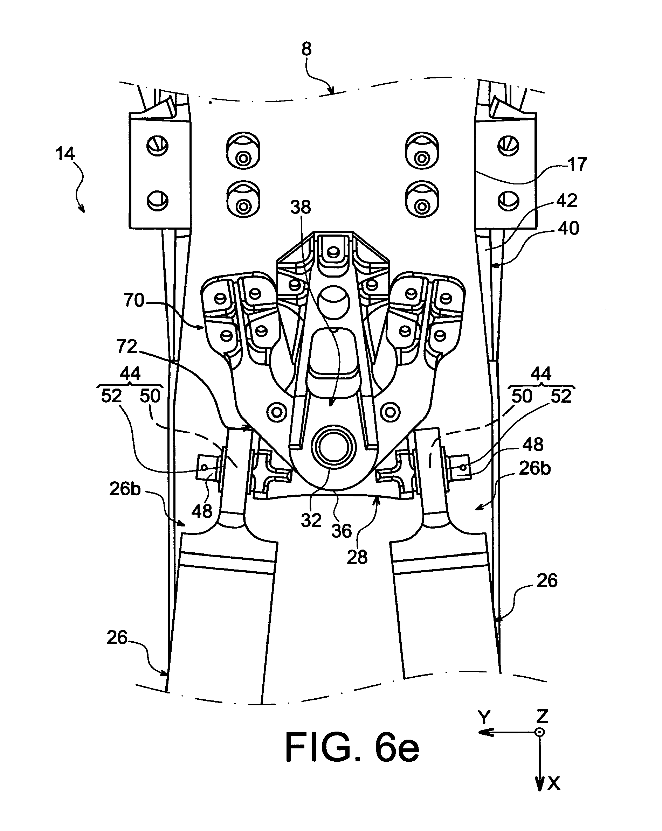

Ensuite, les mêmes opérations sont effectuées pour l'autre bielle 26 tel que cela est représenté sur les figures 6d et 6e, bien que le montage des deux bielles 26 pourrait naturellement être effectué simultanément, sans sortir du cadre de l'invention.

Bien entendu, diverses modifications peuvent être apportées par l'homme du métier aux dispositifs d'accrochage 4 et à l'ensemble moteur 1 qui viennent d'être décrits, uniquement à titre d'exemples non limitatifs. A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Dispositif d'accrochage (4) d'un moteur (6) d'aéronef comportant une structure rigide (8) et des moyens d'accrochage du moteur (6) sur ladite structure rigide (8), lesdits moyens d'accrochage comportant un dispositif de reprise des efforts de poussée (14) générés par le moteur (6), ledit dispositif de reprise des efforts de poussée (14) comportant deux bielles latérales de reprise des efforts de poussée (26) présentant chacune une extrémité arrière (26b) montée sur un palonnier (28) du dispositif (14), par l'intermédiaire d'une liaison mécanique (44),
**caractérisé en ce que** chaque liaison mécanique (44) est réalisée à l'aide d'un pion (48) prévu sur le palonnier (28) et traversant un orifice (50) pratiqué dans l'extrémité arrière (26b) de ladite bielle (26) associée, ledit pion (48) étant agencé de manière à s' étendre sensiblement; selon la direction tranversale (Y) du dispositif d'accrochage.

2. Dispositif d'accrochage (4) d'un moteur (6) selon la revendication 1, **caractérisé en ce que** chaque pion (48) s'étend selon un axe (60) situé dans un angle solide (62) de forme de cône de révolution d'axe central (64) correspondant à une direction transversale (Y) du dispositif d'accrochage, et de valeur inférieure ou égale à 2n.(1-cos(15°)) sr.

3. Dispositif d'accrochage (4) d'un moteur (6) selon la revendication 1 ou la revendication 2, **caractérisé en ce qu'**en vue de dessus, chaque pion (48) s'étend selon un axe (60) formant un angle (66) de valeur inférieure ou égale à 15° avec une direction transversale (Y) du dispositif d'accrochage.

4. Dispositif d'accrochage (4) d'un moteur (6) selon l'une quelconque des revendications précédentes, **caractérisé en ce qu'**en vue de face, chaque pion (48) s'étend selon un axe (60) formant un angle (68) de valeur inférieure ou égale à 15° avec une direction transversale (Y) du dispositif d'accrochage.

5. Dispositif d'accrochage (4) d'un moteur (6) selon l'une quelconque des revendications précédentes, **caractérisé en ce que** pour chaque liaison mécanique (44), ledit pion (48) s'étend orthogonalement par rapport à un axe de la bielle latérale (26) qu'il traverse.

6. Dispositif d'accrochage (4) d'un moteur (6) selon l'une quelconque des revendications précédentes, **caractérisé en ce que** pour chaque liaison mécanique (44), ledit orifice (50) pratiqué dans l'extrémité arrière (26b) de ladite bielle est équipé d'une rotule (52) traversée par le pion (48) prévu sur le palonnier (28).

7. Dispositif d'accrochage (4) d'un moteur (6) selon l'une quelconque des revendications précédentes, **caractérisé en ce que** ledit palonnier (28) est articulé selon un axe d'articulation (32) traversant également une ferrure (38) de raccordement à la structure rigide (8), ledit dispositif de reprise des efforts de poussée (14) comportant en outre une ferrure de butée (70) de forme en fer à cheval également traversée dans sa partie centrale par l'axe d'articulation (32) et destinée à être rapportée fixement sur ladite structure rigide (8), ladite ferrure de butée (70) de forme en fer à cheval présentant une surface de butée (74) située en arrière par rapport au palonnier (28) de manière à pouvoir stopper, dans les deux sens, la rotation du palonnier (28) autour de son axe d'articulation (32).

8. Dispositif d'accrochage (4) d'un moteur (6) selon l'une quelconque des revendications précédentes, **caractérisé en ce que** lesdits moyens d'accrochage du moteur (6) comprennent également une attache moteur avant (10) et une attache moteur arrière (12) fixées sur la structure rigide (8), ladite attache moteur avant (10) étant conçue de manière à reprendre des efforts s'exerçant selon une direction transversale (Y) du dispositif (4) et selon la direction verticale (Z) de ce dispositif, et ladite attache moteur arrière (12) étant conçue de manière à reprendre des efforts s'exerçant selon les directions transversale (Y) et verticale (Z) du dispositif (4) et à assurer la reprise du moment s'exerçant selon une direction longitudinale (X) de ce dispositif.

9. Dispositif d'accrochage (4) d'un moteur (6) selon l'une quelconque des revendications précédentes, **caractérisé en ce que** lesdites deux bielles latérales de reprise des efforts de poussée (26) sont disposées de part et d'autre d'un plan médian vertical et longitudinal (24) du dispositif d'accrochage.

10. Ensemble moteur (1) comprenant un moteur (6) et un dispositif d'accrochage (4) du moteur (6), **caractérisé en ce que** ledit dispositif d'accrochage est un dispositif selon l'une quelconque des revendications précédentes.

11. Aéronef comportant au moins un ensemble moteur selon la revendication 10, assemblé sur une aile ou sur une partie arrière de fuselage de cet aéronef.

## Claims

1. Mounting structure (4) for an aircraft engine (6) comprising a rigid structure (8) and means to mount the engine (6) on said rigid structure (8), said mounting means comprising a thrust load device (14) to transmit thrust generated by the engine (6), said thrust load device (14) comprising two side thrust links (26) each having an aft end (26b) mounted on an evener bar (28) of the device (14), via a mechanical connection (44),
**characterized in that** each mechanical connection (44) consists of a lug ( 48 ) provided on the evener bar (28) and passing through an orifice (50) made in the aft end (26b) of said associated thrust link (26), said lug (48) being arranged so as to extend substantially to a transverse direction (Y) relative to said mounting structure.

2. Mounting structure (4) for an engine (6) according to claim 1, **characterized in that** each lug (48) extends along an axis (60) lying in a solid angle (62) in the form of a cone of revolution whose central axis (64) corresponds to a transverse direction (Y) of the mounting structure, and having a value equal to or less than 2π.(1-cos(15°)) sr.

3. Mounting structure (4) for an engine (6) according to claim 1 or claim 2, **characterized in that** from an overhead view, each lug (48) extends along an axis (60) forming an angle (66) of value equal to or less than 15° with a transverse direction (Y) of the mounting structure.

4. Mounting structure (4) for an engine (6) according to any of the preceding claims, **characterized in that** from a front view each lug (48) extends along an axis (60) forming an angle (68) of value equal to or less than 15° with a transverse direction (Y) of the mounting structure.

5. Mounting structure (4) for an engine (6) according to any of the preceding claims, **characterized in that** for each mechanical connection (44), said lug (48) extends orthogonally relative to an axis of the side thrust link (26) through which it passes.

6. Mounting structure (4) for an engine (6) according to any of the preceding claims, **characterized in that** for each mechanical connection (44), said orifice (50) made in the aft end (26b) of said thrust link is equipped with a ball joint (52) through which the lug (48) passes that is provided on the evener bar (28).

7. Mounting structure (4) for an engine (6) according to any of the preceding claims, **characterized in that** said evener bar (28) is pivoted about a hinge pin (32) which also passes through a connecting bracket (38) connecting to the rigid structure (8), said thrust load device (14) also comprising a horseshoe-shaped abutment bracket (70) through whose central part the hinge pin (32) also passes, said horseshoe-shaped abutment bracket (70) intended to be fixedly secured to said rigid structure (8) and having an abutment surface (74) lying aftward relative to the evener bar (28) so that it is able to stop rotation of the evener bar (28), in both directions, about its hinge pin (32).

8. Mounting structure (4) for an engine (6) according to any of the preceding claims, **characterized in that** said mounting means of the engine (6) also comprise a forward engine attachment (10) and an aft engine attachment (12) attached to the rigid structure (8), said forward engine attachment (10) being designed to transmit loads exerted in a transverse direction (Y) of the device (4) and also in a vertical direction (Z) of this device, and said aft engine attachment (12) being designed to transmit the loads exerted in the transverse (Y) and vertical (Z) directions of the device (4) and to ensure transmitting of the moment exerted in a longitudinal direction (X) of this device.

9. Mounting structure (4) for an engine (6) according to any of the preceding claims, **characterized in that** said two side thrust links (26) are arranged either side of a vertical, longitudinal median plane (24) of the mounting structure.

10. Engine assembly (1) comprising an engine (6) and a mounting structure (4) for the engine (6), **characterized in that** said mounting structure is a device according to any of the preceding claims.

11. Aircraft comprising at least one engine assembly according to claim 10, assembled on a wing or on an aft fuselage portion of this aircraft.

## Patentansprüche

1. Vorrichtung zur Aufhängung (4) eines Triebwerks (6) eines Luftfahrzeugs, umfassend eine starre Struktur (8) und Mittel zur Aufhängung des Triebwerks (6) an der starren Struktur (8), wobei die Aufhängungsmittel eine Vorrichtung zur Aufnahme von durch das Triebwerk (6) erzeugten Schubkräften (14) umfassen, wobei die Vorrichtung zur Aufnahme von Schubkräften (14) zwei seitliche Lenkerstangen zur Aufnahme von Schubkräften (26) umfaßt, die jeweils ein hinteres Endstück (26b) aufweisen, das über eine mechanische Verbindung (44) an einem Ortscheit bzw. Doppelschwengel (28) der Vorrichtung (14) angebracht ist,
**dadurch gekennzeichnet, daß** jede mechanische Verbindung (44) mit Hilfe eines Bolzen (48) realisiert ist, der an dem Ortscheit (28) angebracht ist und durch eine Öffnung (50) geht, die in dem hinteren Endstück (26b) der damit in Verbindung stehenden Lenkerstange (26) ausgebildet ist, wobei der Bolzen (48) derart angelegt ist, daß er sich im wesentlichen in der Transversalrichtung (Y) der Aufhängungsvorrichtung erstreckt.

2. Aufhängungsvorrichtung (4) eines Triebwerks (6) nach Anspruch 1, **dadurch gekennzeichnet, daß** sich jeder Bolzen (48) längs einer Achse (60) erstreckt, die sich in einem festen Winkel (62) befindet, die der Form eines Rotationskegels um die Zentralachse (64), die einer Transversalrichtung (Y) der Auflnängungsvorrichtung entspricht, hat und einen Wert besitzt, der geringer als oder gleich 2π· (1-cos(15°) )sr ist.

3. Aufhängungsvorrichtung (4) eines Triebwerks (6) nach Anspruch 1 oder Anspruch 2, **dadurch gekennzeichnet, daß** sich, von oben gesehen, jeder Bolzen (48) längs einer Achse (60) erstreckt, die einen Winkel (66) eines werts von weniger als oder gleich 15° mit einer Transversalrichtung (Y) der Aufhängungsvorrichtung bildet.

4. Aufhängungsvorrichtung (4) eines Triebwerks (6) nach einem der vorergehenden Absprüche, **dadurch gekennzeichnet, daß**, von der Seite gesehen, sich jeder Bolzen (48) längs einer Achse (60) erstreckt, die einen Winkel (68) eines Werts von geringer als oder gleich 15° mit einer Transversalrichtung (Y) der Aufhängungsvorrichtung bildet.

5. Aufhängungsvorrichtung (4) eines Triebwerks (6) nach einem der vorhergehenden Ansprüche, **dadurch gekennzeichnet, daß** sich für jede mechanische Verbindung (44) der Bolzen (48) orthogonal in Bezug auf eine Achse der seitlichen Lenkerstange (26), durch die er geht, erstreckt.

6. Aufhängungsvorrichtung (4) eines Triebwerks (6) nach einem der vorhergehenden Ansprüche, **dadurch gekennzeichnet, daß** für jede mechanische Verbindung (44) die Öffnung (50), die in dem hinteren Endstück (26b) der Lenkerstange ausgebildet ist, mit einem Kugelgelenk (52) ausgestattet ist, durch das sich der an dem Ortscheit (28) angebrachte Bolzen (48) erstreckt.

7. Aufhängungsvorrichtung (4) eines Triebwerks (6) nach einem der vorhergehenden Ansprüche, **dadurch gekennzeichnet, daß** das Ortscheit (28) um eine Gelenkachse (32), die auch durch einen Beschlag (38) zur Befestigung an der starren Struktur (8) verläuft, beweglich ist, wobei die Vorrichtung zur Aufnahme von Schubkräften (14) ferner einen Anschlagbeschlag (70) in der Form eines Hufeisens umfaßt, durch den ebenfalls in seinem zentralen Bereich die Gelenkachse (32) verläuft und der vorgesehen ist, um fest an der starren Struktur (8) anzusetzen, wobei der Anschlagbeschlag (70) in der Form eines Hufeisens eine Anschlagoberfläche (74) aufweist, die in Bezug auf das Ortscheit (28) derart hinter diesem gelegen ist, daß in beiden Richtungen die Rotation des Ortscheits (28) um dessen Gelenkachse (32) gestoppt werden kann.

8. Aufhängungsvorrichtung (4) eines Triebwerks (6) nach einem der vorhergehenden Ansprüche, **dadurch gekennzeichnet, daß** die Aufhängungsmittel des Triebwerk (6) auch eine vordere Triebwerkaufhängung (10) und eine hintere Triebwerkaufhängung (12), die an der starren Struktur (8) befestigt sind, umfassen, wobei die vordere Triebwerkaufhängung (10) zur Aufnahme von Kräften, die in Transversalrichtung (Y) der Vorrichtung (4) und in Vertikalrichtung (Z) dieser Vorrichtung auftreten gestaltet ist und die hintere Triebwerkaufhängung (12) zur Aufnahme von Kräften, die in Transversalrichtung (Y) und Vertikalrichtung (Z) der Vorrichtung (4) auftreten, und zur Gewährleistung der Aufnahme des Moments, das in Längsrichtung (Y) dieser Vorrichtung auftritt, gestaltet ist.

9. Aufhängungsvorrichtung (4) eines Triebwerks (6) nach einem der vorhergehenden Ansprüche, **dadurch gekennzeichnet, daß** sich die zwei seitlichen Lenkerstange zur Aufnahme von Schubkräften (26) beiderseits einer vertikalen und longitudinalen Mittelebene (24) der Aufhängungsvorrichtung befinden.

10. Triebwerkanordnung (1), die ein Triebwerk (6) und eine Aufhängungsvorrichtung (4) des Triebwerks (6) umfaßt, **dadurch gekennzeichnet, daß** die Aufhängungsvorrichtung eine Vorrichtung nach einem der vorhergehenden Ansprüche ist.

11. Luftfahrzeug, das mindestens eine Triebwerkanordnung nach Anspruch 10 umfaßt, die an einem Tragflügel oder an einem hinteren Rumpfbereich dieses Luftfahrzeugs angebracht ist.
